(19) **Europäisches Patentamt / European Patent Office / Office européen des brevets**

(11) **EP 3 234 250 B2**

(12) # NOUVEAU FASCICULE DE BREVET EUROPEEN
Après la procédure d'opposition

(45) Date de publication et mention de la décision concernant l'opposition:
**20.04.2022 Bulletin 2022/16**

(45) Mention de la délivrance du brevet:
**29.08.2018 Bulletin 2018/35**

(21) Numéro de dépôt: **15820090.7**

(22) Date de dépôt: **16.12.2015**

(51) Classification Internationale des Brevets (IPC):
**B01D 45/12** (2006.01)　　**F26B 21/00** (2006.01)
**F26B 13/30** (2006.01)　　**D06B 15/04** (2006.01)

(52) Classification Coopérative des Brevets (CPC):
**D06B 15/04; F26B 13/30; F26B 21/004;**
D06B 15/09

(86) Numéro de dépôt international:
**PCT/EP2015/080095**

(87) Numéro de publication internationale:
**WO 2016/097055 (23.06.2016 Gazette 2016/25)**

(54) **INSTALLATION D'EXTRACTION D'EAU**

WASSEREXTRAKTIONSANLAGE

WATER EXTRACTION FACILITY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**MA MD**

(30) Priorité: **17.12.2014 FR 1402885**

(43) Date de publication de la demande:
**25.10.2017 Bulletin 2017/43**

(73) Titulaire: **ANDRITZ Perfojet SAS 38330 Montbonnot (FR)**

(72) Inventeurs:
• **SCHMIT, Laurent**
**38420 Le Versoud (FR)**
• **PLANET, Alain**
**38530 Barraux (FR)**

(74) Mandataire: **Eidelsberg, Victor Albert et al Cabinet Flechner 22, Avenue de Friedland 75008 Paris (FR)**

(56) Documents cités:
| | |
|---|---|
| EP-A2- 0 056 846 | EP-A2- 0 853 156 |
| WO-A2-2012/009265 | CH-A5- 615 713 |
| DE-A1- 1 461 111 | DE-A1- 1 461 112 |
| DE-A1- 1 635 113 | DE-A1-102008 044 849 |
| US-A- 3 246 401 | US-A- 3 276 140 |
| US-A- 3 574 952 | US-A- 3 755 916 |
| US-A1- 2002 066 204 | |

EP 3 234 250 B2

**Description**

Il est connu dans l'industrie des papiers, des tissus et des non-tissés d'appliquer une dépression soit directement, soit au travers d'un convoyeur perméable support, pour extraire une partie de l'eau ou de l'humidité contenue dans ces produits (voir par exemple DE1635113 et EP0056846). Au CH 615713 A5, on décrit une installation d'extraction d'eau comprenant une caisse aspirante ayant une fente d'aspiration et communiquant par un conduit avec un séparateur séparant de l'air de l'eau. La partie haute du séparateur communique par une tuyauterie sur laquelle est montée une pompe à vide avec un caisson de diffusion disposé au dessus de la fente d'aspiration et débouchant vers celle-ci par un raccord.

On a constaté que la répartition de la déshumidification sur la laize laisse à désirer et que le voile de non-tissé est souvent pollué. En outre, il faut souvent nettoyer l'installation.

L'invention pallie ces inconvénients par une installation d'extraction d'eau suivant la revendication 1.

En créant une perte de charge par la tôle perforée, on assure la répartition homogène du flux d'air sur la laize.

On crée une perte de charge suffisante lorsque de préférence le taux de vide de la tôle perforée est compris entre 10 et 40%, de préférence de 18 à 22%. Le taux de vide est défini par le rapport de la surface ouverte de la tôle à la surface totale de la tôle. La tôle a de préférence une épaisseur allant de 1 à 4 mm. Les perforations ont de préférence un diamètre de 2 à 8 mm et, mieux, de 2,8 à 3,2 mm.

Le raccord oblong comme le caisson est bridé à un canal dans lequel est monté un faisceau en nid d'abeille, dont la dimension des alvéoles est plus grande que celle des perforations de la tôle perforée d'une longueur de 30 à 100 mm, de préférence de 40 à 60 mm et le diamètre équivalent d'un alvéole est compris entre 3 et 10 mm, de préférence entre 4 et 6 mm. Le diamètre équivalent D se calcule par $D = \dfrac{4S}{P}$, S étant la section de l'alvéole et P étant le périmètre de l'alvéole. Les alvéoles sont de préférence de section droite hexagonale. D'une manière très préférée, on a longueur/D équivalent du nid d'abeille > 10. Le faisceau en nid d'abeille permet d'orienter le flux parallèlement à la direction du canal et de maximiser ainsi le transfert de l'air de diffusion vers la caisse aspirante. Mais les particules polluantes provenant d'amas de fibres relarguées par le ventilateur polluent le nid d'abeille et provoquent des défauts d'homogénéité de l'écoulement au fur et à mesure de l'encrassement du nid d'abeille. La tôle perforée joue aussi un rôle de filtration, en évitant la pollution du faisceau en nid d'abeille et du voile non-tissé. Dans cette fonction, la tôle perforée est recouverte (en étant en amont dans le sens du passage de l'air) d'une toile métallique ayant un taux de vide compris entre 25 et 50% et d'une épaisseur comprise entre 0,5 et 2 mm et dont une dimension des perforations est plus petite que celles de la tôle perforée et est comprise entre 0,1 et 1mm (cette dimension étant notamment le diamètre), ce qui assure une filtration encore meilleure. Le faisceau en nid d'abeille est, de préférence, supporté par une autre tôle perforée ayant un taux de vide supérieur à 40%, notamment de 40% à 60%.

On mesure et définit le coefficient K de perte de charge de la manière suivante :

Mesure :

On mesure la pression statique P1 juste en amont de l'ensemble tôle perforée + toile.

On mesure la pression statique P2 juste en aval de l'ensemble tôle perforée + toile.

On mesure la température T en amont de l'ensemble tôle perforée + toile.

On mesure le débit Q qui circule à travers l'ensemble tôle perforée + toile.

Cette mesure peut s'effectuer en mesurant par exemple les vitesses d'air sur la section de sorite du diffuseur (cartographie de vitesse). Débit = section sortie*vitesse moyenne sur la section de sortie.

Autre façon de mesurer le débit : grâce aux courbes de performances du ventilateur qui fait circuler l'air dans le caisson de diffusion.

Connaissant les pressions statiques juste en amont et en aval du ventilateur, connaissant également la puissance consommée par le moteur du ventilateur, on peut, grâce aux courbes de performance du ventilateur, en déduire aisément le débit.

Définition :

Le coefficient K est donné par la formule suivante :

$$K = (Ro * V^2) / (2 * (P1 - P2))$$

Avec Ro, densité du fluide en amont de la tôle perforée=P1/(287*T)

V=Q/S1, avec S1-section de passage du fluide dans l'ensemble tôle perforée + toile.

Unités :

Q en M3/s

V en m/3s

S1 en m$^2$

P1 et P2 en Pa

Ro en kg/m3

T en Kelvin

K sans unité.

C'est maintenant la tôle perforée qui s'encrasse le plus vite. C'est pourquoi, il est prévu, suivant un mode de réalisation de l'invention, de la monter dans un tiroir amovible, qui a de préférence une poignée à l'extérieur du raccord. Pour remplacer la tôle perforée, il n'est plus nécessaire de débrider le raccord du canal. Il suffit de sortir le tiroir dans lequel la tôle perforée est montée, de sortir la tôle perforée du tiroir, de la nettoyer, puis de la remettre dans le tiroir ou d'en mettre une neuve et de remettre le tiroir en place dans le raccord. L'entretien de l'installation est grandement facilité.

Aux dessins annexés, donnés uniquement à titre d'exemples :

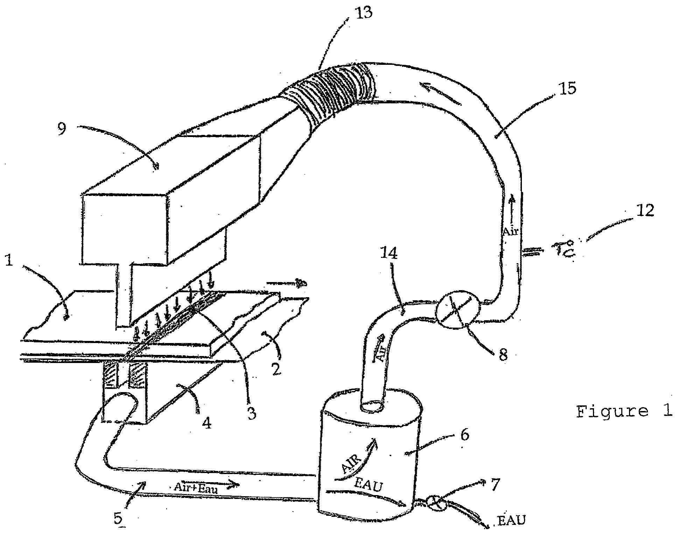

La figure 1 illustre l'installation suivant l'invention,

La figure 2 est une vue en perspective de la caisse de diffusion et

La figure 3 en est une vue en élévation.

La figure 4 est une vue en perspective d'une autre caisse de diffusion.

Le non-tissé gorgé d'eau 1, mis en mouvement par la toile de convoyeur 2, passe au-dessus de la fente 3 aspirante. Le vide (-400 à -500 mbar) créé dans la caisse aspirante 4 par la pompe à vide 8, génère à travers cette fente un courant d'air, qui traverse l'ensemble non-tissé 1 + toile de convoyeur 2 en emportant une partie de l'eau contenue dans le non-tissé 1.

Le mélange air-eau ainsi constitué est évacué par une tuyauterie 5 jusqu'au séparateur 6.

Le rôle du séparateur 6 est de séparer l'air et l'eau par effet cyclonique :

- en partie basse, l'eau est évacuée par une pompe 7 vers le circuit de filtration ou un drain,
- en partie haute, c'est-à-dire au-dessus du niveau de séparation entre l'air et l'eau, l'air est évacué par une pompe à vide 8 à travers la tuyauterie 14.

En traversant la pompe à vide 8, le courant d'air s'échauffe à une température mesurée par un thermomètre 12 et est ensuite acheminé jusqu'à une caisse de diffusion 9 par une tuyauterie 15, puis par un flexible 13.

La caisse de diffusion va diffuser de manière homogène l'air chaud au-dessus de la fente d'aspiration 3.

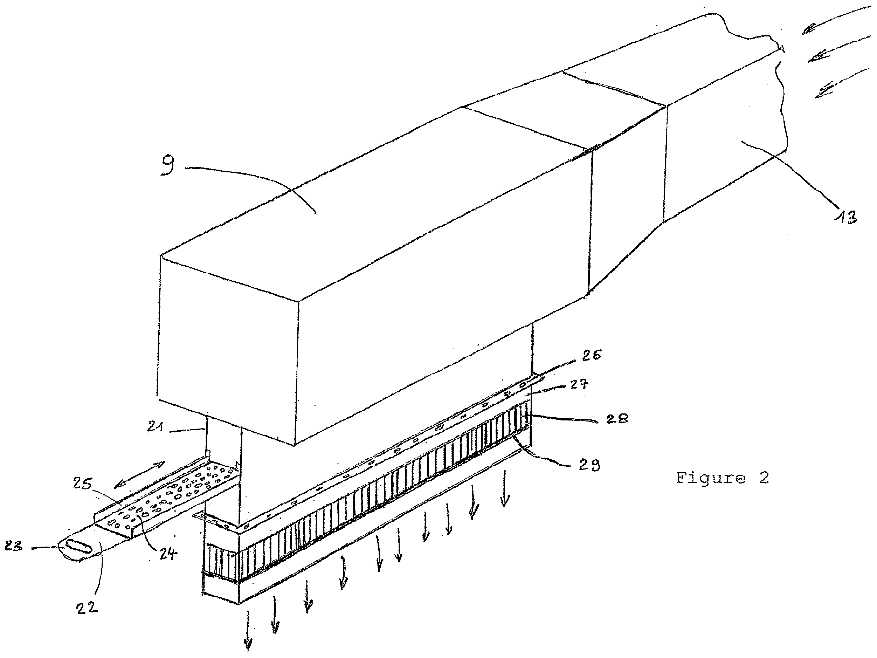

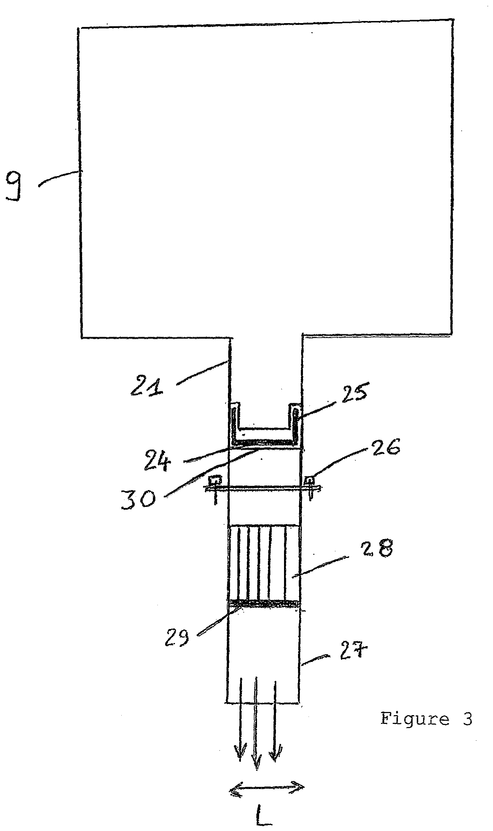

La caisse de diffusion représentée aux figures 2 et 3 comporte un caisson 9 par exemple parallélépipédique ayant deux faces frontales, dont l'une est fermée et dont l'autre de section Se reçoit le flexible 13. De la grande face inférieure part un raccord 21 parallélépipédique de même longueur que le caisson. La largeur du caisson 9 est de 200 à 500 mm. La largeur L1 du raccord 21 est de 40 à 60 mm. Sa section dénommée est S1. Dans ce raccord 21, est monté un tiroir 22 coulissant ayant une poignée 23 et portant une tôle 24 perforée ayant un taux d'ouverture de 10 à 40 %. Le tiroir 22 coulisse dans le raccord 21 par des glissières 25. La tôle 24 perforée est recouverte d'une toile 30 métallique fine ayant un taux de vide compris entre 25 et 50 et un diamètre des ouvertures de 0,5 mm. La toile 30 est en amont de la tôle 24 dans le sens du passage de l'air.

Au raccord 21 est bridé, par des brides 26, un canal 27, dans lequel est monté un faisceau 28 en nid d'abeille de section S2, S2=L*L2, avec L=longueur de zone de diffusion=laize de la machine et L2=largeur de la section au niveau de la sortie du faisceau 28, supporté par une tôle 29 perforée ayant un taux de vide de 40 à 60%. Les alvéoles du faisceau 28 en nid d'abeille ont une dimension de 4 à 10 mm.

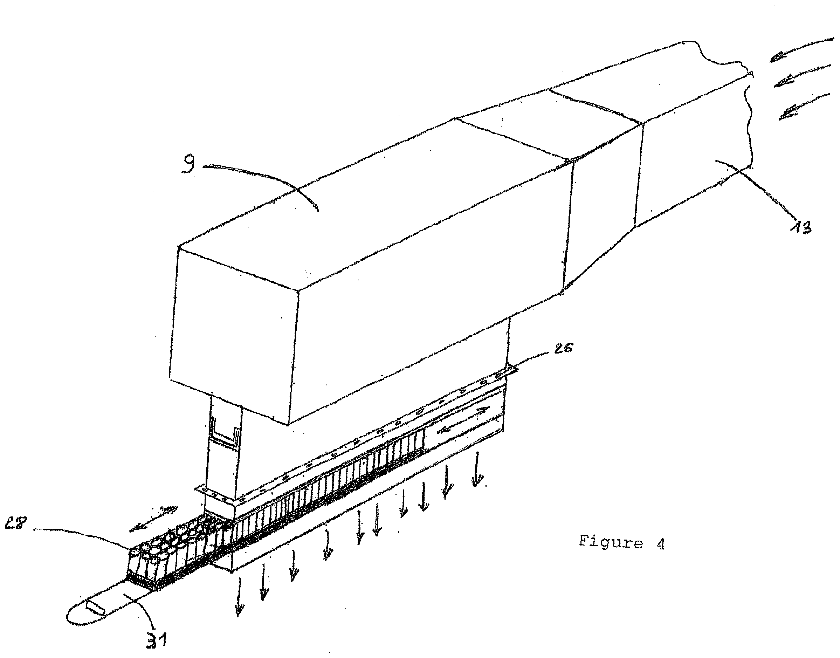

La figure 4 est une vue semblable à la figure 2 d'une caisse de diffusion dans laquelle le faisceau 28 en nid d'abeille est monté sur un tiroir 31 amovible.

## Revendications

1. Installation d'extraction d'eau, comprenant une caisse (4) aspirante ayant une fente (3) d'aspiration et communiquant par un conduit (5) avec un séparateur (6) séparant de l'air de l'eau, la partie haute du séparateur (6) communiquant par une tuyauterie (14, 15), sur laquelle est montée une pompe (8) à vide, avec un caisson (9), disposé au-dessus de la fente (3) d'aspiration et débouchant vers celle-ci (3) par un raccord (21), **caractérisée en ce que**

   - une tôle (24) perforée créant une perte de charge est montée dans le raccord (21),
   - le raccord (21) est bridé à un canal (27) dans lequel est monté un faisceau (28) en nid-d'abeilles dont la dimension des alvéoles est plus grande que celle des perforations de la tôle (24) perforée,
   - la tôle (24) perforée est recouverte d'une toile (30) métallique ayant un taux de vide compris entre 25 et 50% et ayant des perforations dont une dimension est plus petite que celles des perforations de la tôle perforée.

2. Installation suivant la revendication 1, **caractérisée en ce que** le taux de vide de la tôle (24) perforée est compris entre 10 et 40%.

3. Installation suivant la revendication 1 ou 2, **caracté-**

risée en ce qu'une dimension des perforations de la toile est comprise entre 0,1 et 1 mm.

4. Installation suivant l'une des revendications précédentes, **caractérisée en ce que** le faisceau (28) est supporté par une autre tôle (29) perforée ayant un taux de vide supérieur à 40%.

5. Installation suivant l'une des revendications précédentes, **caractérisée en ce que** la tôle (24) perforée est montée dans un tiroir (22) amovible.

6. Installation suivant l'une des revendications précédentes, **caractérisée en ce que** le faisceau (28) est monté dans un tiroir amovible.

## Patentansprüche

1. Entwässerungsanlage, welche einen Saugkasten (4) umfasst, der einen Saugschlitz (3) aufweist und über ein Leitungsrohr (5) mit einem Abscheider (6) kommuniziert, der Luft von Wasser trennt, wobei der obere Teil des Abscheiders (6) über eine Rohrleitung (14, 15), in der eine Vakuumpumpe (8) angebracht ist, mit einem Kasten (9) kommuniziert, der oberhalb des Saugschlitzes (3) angeordnet ist und in Richtung desselben (3) über ein Anschlussstück (21) mündet, **dadurch gekennzeichnet, dass**

   - ein Lochblech (24), das einen Druckabfall erzeugt, in dem Anschlussstück (21) angebracht ist,
   - das Anschlussstück (21) an einen Kanal (27) angeflanscht ist, in welchem ein wabenförmiges Bündel (28) angebracht ist, wobei die Abmessung der Waben desselben größer als diejenige der Löcher des Lochbleches (24) ist,
   - das Lochblech (24) von einem Metallgewebe (30) bedeckt ist, das einen Hohlraumanteil zwischen 25 und 50 % aufweist und Löcher aufweist, von denen eine Abmessung kleiner als diejenigen der Löcher des Lochbleches ist.

2. Anlage nach Anspruch 1, **dadurch gekennzeichnet, dass** der Hohlraumanteil des Lochbleches (24) zwischen 10 und 40 % liegt.

3. Anlage nach Anspruch 1 oder 2, **dadurch gekennzeichnet, dass** eine Abmessung der Löcher des Gewebes zwischen 0,1 und 1 mm liegt.

4. Anlage nach einem der vorhergehenden Ansprüche, **dadurch gekennzeichnet, dass** das Bündel (28) von einem weiteren Lochblech (29) gestützt wird, das einen Hohlraumanteil von mehr als 40 % aufweist.

5. Anlage nach einem der vorhergehenden Ansprüche, **dadurch gekennzeichnet, dass** das Lochblech (24) in einem herausnehmbaren Einschub (22) angebracht ist.

6. Anlage nach einem der vorhergehenden Ansprüche, **dadurch gekennzeichnet, dass** das Bündel (28) in einem herausnehmbaren Einschub angebracht ist.

## Claims

1. A water extraction facility, comprising a suction box (4) having a suction opening (3) and communicating via a conduit (5) with a separator (6) separating air from water, the top part of the separator (6) communicating via pipework (14, 15), on which is mounted a vacuum pump (8), with a chamber (9), disposed above the suction opening (3) and opening out towards the suction opening (3) via a connector (21), **characterised in that**

   - a perforated sheet metal element (24) creating head loss is mounted in the connector (21),
   - the connector (21) is clamped to a channel (27) in which is mounted a honeycomb bundle (28), the dimension of the cells thereof being greater than that of the perforations of the perforated sheet metal element (24),
   - the perforated sheet metal element (24) is covered with a metallic web (30) that has a void fraction of between 25 and 50% and that has perforations of which one dimension is smaller that those of the perforations of the perforated sheet metal element.

2. The facility according to Claim 1, **characterised in that** the void fraction of the perforated sheet metal element (24) is between 10% and 40%.

3. The facility according to Claim 1 or 2, **characterised in that** one dimension of the perforations of the web is between 0.1 and 1 mm.

4. The facility according to any one of the previous claims, **characterised in that** the bundle (28) is supported by another perforated metal sheet element (29) that has a void fraction greater than 40%.

5. The facility according to any one of the previous claims, **characterised in that** the perforated sheet metal element (24) is mounted in a removable drawer (22).

6. The facility according to any one of the previous claims, **characterised in that** the bundle (28) is mounted in a removable drawer.

Figure 1

Figure 2

Figure 3

EP 3 234 250 B2

Figure 4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 1635113
- EP 0056846 A

- CH 615713 A5